# EUROPEAN PATENT APPLICATION

(11) **EP 4 722 869 A1**
(43) Date of publication of application: **08.04.2026**
(21) Application number: 25158430.6
(22) Date of filing: 17.02.2025
(51) Int. Cl.: G06F 3/01, G06F 3/0346

(54) **TRACKING METHOD, MULTI-DEVICE SYSTEM AND NON-TRANSITORY COMPUTER READABLE STORAGE MEDIUM**

(30) Priority: 03.10.2024 US 202418906137
(71) Applicant: HTC Corporation, Taoyuan City 330 (TW)
(72) Inventor: HUANG, Chun-Kai, Taoyuan City 330 (TW); CHEN, Chih Chien, Taoyuan City 330 (TW)
(74) Representative: Klang, Alexander H.

(57) **Abstract**

The present disclosure provides a tracking method and a multi-device system. The multi-device system is operable in a physical environment. The multi-device system includes a host device and a peripheral device. The tracking method includes: by the host device, generating a first pose data of the peripheral device based on an interaction between the host device and the peripheral device; by the peripheral device, receiving a host map of the physical environment established by the host device; by the peripheral device, generating a second pose data of the peripheral device based on the host map; and by the peripheral device, transferring the second pose data to stop the host device generating the first pose data.

## Description

### BACKGROUND

### Field of Invention

This disclosure relates to a method and a system, in particular to a tracking method and a multi-device system.

### Description of Related Art

In the fields of the immersive system implemented by multiple devices, some related arts allow a master of the devices to track other devices (i.e., slaves) through optical tracking capable of providing accurate tracking results. However, these related arts require the slaves to be in the field of view (FOV) of the master instead of being in the dead zone (or the blind spot) of the master. Some related arts allow the slaves to track themselves through Simultaneous Localization and Mapping (SLAM), but requires the constant data exchange between the master and each slave to ensure each slave's data to be in alignment with the master's system. Therefore, it is necessary to propose a new approach for the master to track the slaves.

### SUMMARY

An aspect of present disclosure relates to a tracking method applicable to a multi-device system in a physical environment, wherein the multi-device system includes a host device and a peripheral device, and the tracking method includes: by the host device, generating a first pose data of the peripheral device based on an interaction between the host device and the peripheral device; by the peripheral device, receiving a host map of the physical environment established by the host device; by the peripheral device, generating a second pose data of the peripheral device based on the host map; and by the peripheral device, transferring the second pose data to stop the host device generating the first pose data.

Another aspect of present disclosure relates to a multi-device system operable in a physical environment. The multi-device system includes a host device and a peripheral device. The host device is configured to establish a host map of the physical environment. The peripheral device is configured to receive the host map. The host device is configured to generate a first pose data of the peripheral device based on an interaction between the host device and the peripheral device. The peripheral device is configured to generate a second pose data of the peripheral device based on the host map, and is configured to transfer the second pose data to stop the host device generating the first pose data.

Another aspect of present disclosure relates to a non-transitory computer readable storage medium with a computer program to execute a tracking method applicable to a multi-device system in a physical environment, wherein the multi-device system includes a host device and a peripheral device, and the tracking method includes: by the host device, generating a first pose data of the peripheral device based on an interaction between the host device and the peripheral device; by the peripheral device, receiving a host map of the physical environment established by the host device; by the peripheral device, generating a second pose data of the peripheral device based on the host map; and by the peripheral device, transferring the second pose data to stop the host device generating the first pose data.

It is to be understood that both the foregoing general description and the following detailed description are by examples, and are intended to provide further explanation of the invention as claimed.

### BRIEF DESCRIPTION OF THE DRAWINGS

The present disclosure can be more fully understood by reading the following detailed description of the embodiment, with reference made to the accompanying drawings as follows:
Fig. 1 is a schematic diagram of a multi-device system in accordance with some embodiments of the present disclosure;
Fig. 2 is a flow diagram of a tracking method in accordance with some embodiments of the present disclosure;
Fig. 3 is a flow diagram of one operation of the tracking method in accordance with some embodiments of the present disclosure;
Fig. 4 is a flow diagram of one operation of the tracking method in accordance with some embodiments of the present disclosure;
Fig. 5 is a block diagram of a host device of the multi-device system in accordance with some embodiments of the present disclosure; and
Fig. 6 is a flow diagram of the tracking method in accordance with some embodiments of the present disclosure.

### DETAILED DESCRIPTION

The embodiments are described in detail below with reference to the appended drawings to better understand the aspects of the present application. However, the provided embodiments are not intended to limit the scope of the disclosure, and the description of the structural operation is not intended to limit the order in which they are performed. Any device that has been recombined by components and produces an equivalent function is within the scope covered by the disclosure.

As used herein, "coupled" and "connected" may be used to indicate that two or more elements physical or electrical contact with each other directly or indirectly, and may also be used to indicate that two or more elements cooperate or interact with each other.

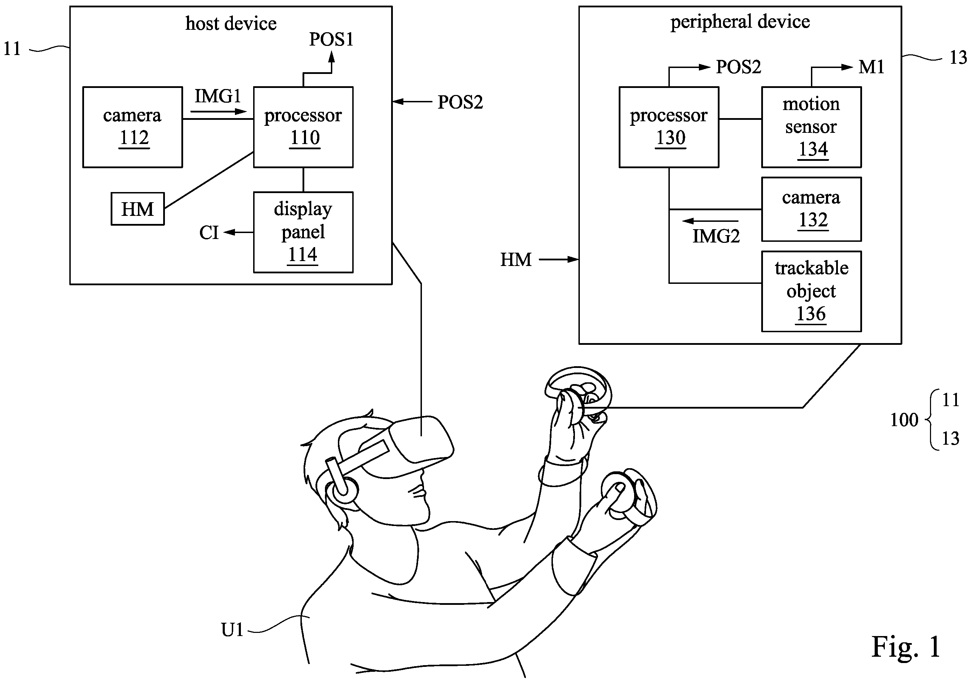

Referring to Fig. 1, Fig. 1 is a schematic diagram of a multi-device system 100 in accordance with some embodiments of the present disclosure. In some embodiments, the multi-device system 100 can be operated by a user U1 in a physical environment (e.g., a gaming place, a workplace, a house, etc.), and can provides an immersive experience for the user U1.

In some embodiments, as shown in Fig. 1, the multi-device system 100 includes a host device 11 and at least one peripheral device 13. In some practical applications, the host device 11 can be implemented with a wearable display device (e.g., a head-mounted device (HMD)) of an immersive system, and the peripheral device 13 can be implemented with a controller device (e.g., a handheld controller, a wearable controller, etc.) of the immersive system.

In some embodiments, the host device 11 is configured to localize both itself and the peripheral device 13 in the physical environment, and is configured to provide a visual feedback for the user U1 based on the localizations of the host device 11 and the peripheral device 13. Accordingly, as shown in Fig. 1, the host device 11 includes a processor 110, a camera 112 and a display panel 114. The processor 110 is electrically and/or communicatively coupled to the camera 112 and the display panel 114.

In the above embodiments of the host device 11, the camera 112 is configured to capture multiple host-based images in the physical environment. It should be understood that these host-based images may include at least one of images of the whole or partial physical environment, images of the peripheral device 13 and images of the user U1. The processor 110 is configured to use some feature extraction based localization technologies (e.g., Simultaneous Localization and Mapping (SLAM)) to calculate the position and/or orientation of the host device 11 according to the host-based images captured by the camera 112. The processor 110 is configured to use some interaction-based tracking technologies (e.g., optical tracking) to calculate the position and/or orientation of the peripheral device 13. Also, the processor 110 is configured to generate at least one visual content according to the positions and/or orientations of the host device 11 and the peripheral device 13. The display panel 114 is configured to display the at least one visual content generated by the processor 110, so as to provide an immersive content CI (i.e., the visual feedback) for the user U1.

In some embodiments, the host device 11 may occlude the direct visibility of the user U1 to the physical environment. In this case, the immersive content CI can be a virtual reality (VR) environment, or a mixed reality (MR) environment. In particular, the virtual reality environment may include at least one virtual reality object, which cannot be directly seen in the physical environment by the user U1. The mixed reality environment simulates the physical environment and enables an interaction of the at least one virtual reality object with a simulated physical environment. However, the present disclosure is not limited herein. For example, the immersive content CI can be the simulated physical environment without the virtual reality objects, which is known as a pass-through view.

In some embodiments, the host device 11 does not occlude the direct visibility of the user U1 to the physical environment. In this case, the immersive content CI can be an augmented reality (AR) environment. In particular, the augmented reality environment augments the physical environment directly seen by the user U1 with the at least one virtual reality object.

In some embodiments, the peripheral device 13 is configured to localize itself in the physical environment, and is configured to interact with the host device 11 to facilitate the localization of the peripheral device 13 performed by the host device 11. Accordingly, as shown in Fig. 1, the peripheral device 13 includes a processor 130, a camera 132, a motion sensor 134 and at least one trackable object 136. The processor 130 is electrically and/or communicatively coupled to the camera 132, the motion sensor 134 and the trackable object 136. In particular, the trackable object 136 is arranged on the exterior surfaces of the peripheral device 13 to be directly seen by the user U1 or be directly captured by the camera 112 of the host device 11. Moreover, in accordance with the above embodiments that the immersive content CI is the virtual reality environment, the mixed reality environment or the augmented reality environment, the user U1 can control the at least one virtual reality object in the immersive content CI with the peripheral device 13.

In the above embodiments of the peripheral device 13, the camera 132 is configured to capture multiple peripheral-based images in the physical environment. It should be understood that these peripheral-based images may include at least one of images of the whole or partial physical environment, images of the host device 11 and images of the user U1. The motion sensor 134 is configured to sense the movement of the peripheral device 13 to generate motion data M1. The processor 130 is configured to use some feature extraction based localization technologies (e.g., SLAM) to calculate the position and/or orientation of the peripheral device 13 according to the peripheral-based images captured by the camera 132. The processor 130 is configured to use some mathematical calculations to calculate the position and/or orientation of the peripheral device 13 according to the motion data M1 generated by the motion sensor 134. Also, the processor 130 is configured to actuate the trackable object 136 to allow the peripheral device 13 to interact with the host device 11. For example, when the trackable object 136 is actuated, the processor 110 of the host device 11 can recognize images of the trackable object 136 arranged on the peripheral device 13 from the peripheral-based images captured by the camera 112 of the host device 11.

In the above embodiments, the processor 110 and the processor 130 each can be implemented with a central processing unit (CPU), a graphic processing unit (GPU), an application-specific integrated circuit (ASIC), a microprocessor, a system on a Chip (SoC) or other suitable processing circuits. The display panel 114 can be implemented with an active matrix organic light emitting diode (AMOLED) display, organic light emitting diode (OLED) display, or other suitable displays. The motion sensor 134 can be implemented with an inertial measurement unit (IMU) including an accelerometer, a gyroscope and a magnetometer, or other suitable sensors. The trackable object 136 can be implemented with an infrared light emitting diode (LED), or other suitable objects. In addition, the host device 11 and the peripheral device 13 each can further include a storage (e.g., a volatile memory, a non-volatile memory, etc.) and a communicator (e.g., a Wi-Fi module, a Bluetooth Low Energy (BLE) module, a Bluetooth module, etc.) to store signals, data and/or information and to communicate with each other or other devices (e.g., transferring signals, data and/or information). In some embodiment, the trackable object 136 may be the whole or partial physical shape of the peripheral device 13. That is, the shape of the peripheral device 13 may be pre-stored in the storage of the host device 11 so that the host device 11 may recognize the peripheral device 13 (trackable object 136).

It can be seen from the above embodiments that both the host device 11 and the peripheral device 13 are able to localize the peripheral device 13 in the physical environment. As should be understood, the host device 11 requires the peripheral device 13 to be in the proximity of the host device 11 when using the interaction-based tracking technologies to generate the position and/or orientation of the peripheral device 13. Notably, in some embodiments, the host device 11 can obtain the position and/or orientation of the peripheral device 13 generated by the peripheral device 13 using the feature extraction based localization technologies, and the peripheral device 13 is not required to be in the proximity of the host device 11.

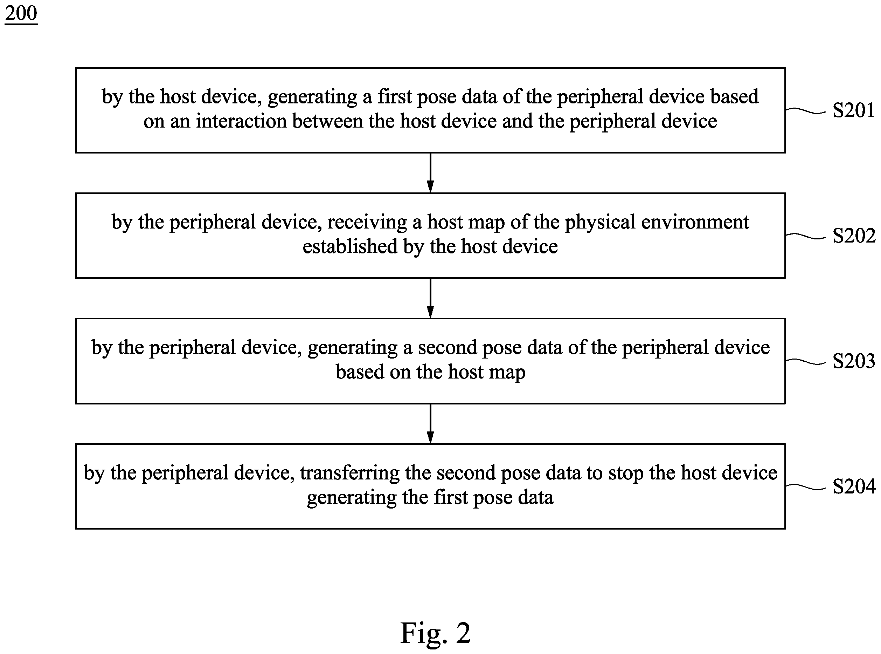

In some embodiments, the multi-device system 100 is applied to perform a tracking method 200 to track the peripheral device 13. Referring to Fig. 2, Fig. 2 is a flow diagram of the tracking method 200 in accordance with some embodiments of the present disclosure. In some embodiments, as shown in Fig. 2, the tracking method 200 includes operations S201-S204. However, the present disclosure should not be limited thereto.

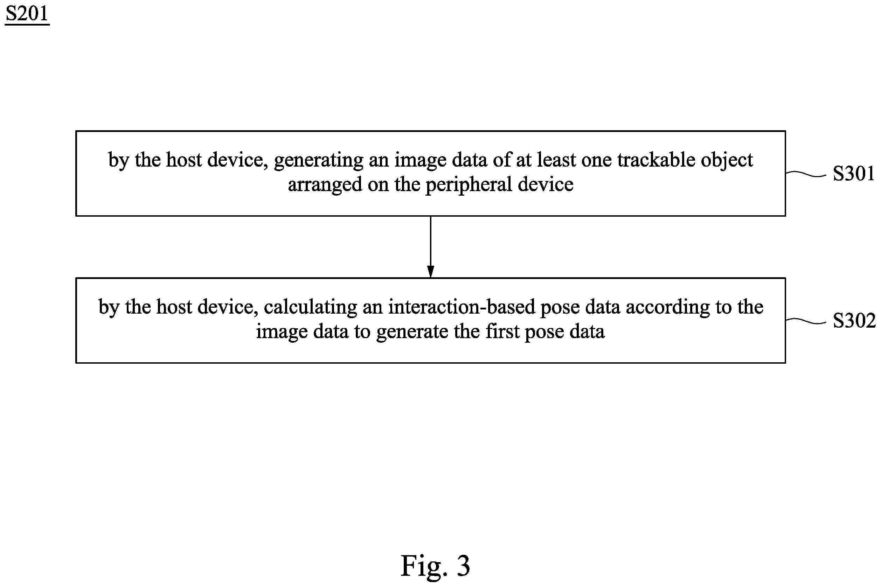

In operation S201, the host device 11 generates a first pose data POS1 of the peripheral device 13 based on an interaction between the host device 11 and the peripheral device 13, which would be described in detail below with reference to Fig. 3. Fig. 3 is a flow diagram of operation S201 in accordance with some embodiments of the present disclosure. In some embodiments, as shown in Fig. 3, operation S201 includes sub-operations S301-S302.

In sub-operation S301, as shown in Fig. 1, the host device 11 generates an image data IMG1 of the at least one trackable object 136 arranged on the peripheral device 13. In some embodiments, the trackable object 136 arranged on the peripheral device 13 is actuated. For example, the infrared light emitting diode, which is used to implement the trackable object 136, is controlled to emit the infrared light. Then, the host device 11 uses the camera 112 to capture the aforementioned host-based images including the images of the trackable object 136 as the image data IMG1.

In sub-operation S302, the host device 11 calculates an interaction-based pose data according to the image data IMG1 to generate the first pose data POS1. In some embodiments, as shown in Fig. 1, the processor 110 receives the image data IMG1 provided by the camera 112. The processor 110 may perform, for example triangulation, on the image data IMG1 to calculate the position and/or orientation of the trackable object 136 in the physical environment as the interaction-based pose data. It should be understood that the interaction-based pose data can be used to represent the position and/or orientation of the peripheral device 13 in the physical environment. In some embodiments, the interaction-based pose data is directly used by the processor 110 as the first pose data POS1.

In some practical applications, the sampling frequency (e.g., 30 Hz) of the camera 112 is too low to satisfy some resolution requirements of the immersive system. In contrast, the sampling frequency (e.g., at least 100 Hz) of the motion sensor 134 is high enough for the resolution requirements of the immersive system. Accordingly, in some further embodiments of sub-operation S302, at each break in the image capture of the camera 112, the processor 110 performs some mathematical calculations on the motion data M1 generated by the motion sensor 134 to calculate the position and/or orientation of the peripheral device 13 in the physical environment as the first pose data POS1. It should be understood that the motion data M1 of the peripheral device 13 can be received by the host device 11 before sub-operation S302 is executed. In brief, the host device 11 can generate the first pose data POS1 according to at least one of the motion data M1 and the interaction-based pose data to satisfy the resolution requirements of the immersive system.

In operation S202, the peripheral device 13 receives a host map HM of the physical environment established by the host device 11. In some embodiments, the host map HM is established by the processor 110 of the host device 11 using the aforementioned host-based images captured by the camera 112. In particular, by the feature extraction based localization technologies, the processor 110 selects at least one image from the host-based images as at least one key frame, extracts multiple feature points from the at least one key frame, and uses these feature points as map points to generate the host map HM. Furthermore, the host map HM of the physical environment can be updated by the processor 110 each time one key frame is determined. For example, the processor 110 can add at least one new map point to the host map HM or can adjust the descriptor of at least one exist map point in the host map HM.

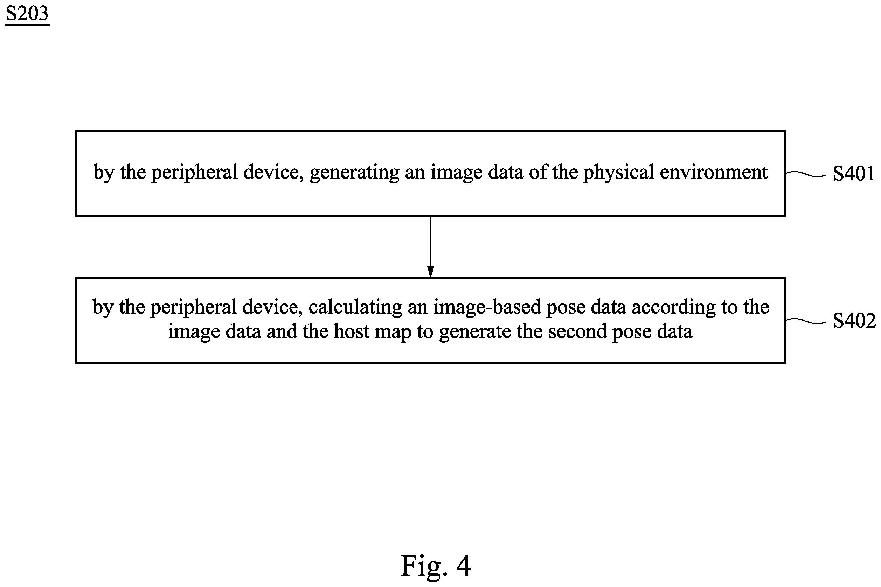

In operation S203, the peripheral device 13 generates a second pose data POS2 of the peripheral device 13 based on the host map HM, which would be described in detail below with reference to Fig. 4. Fig. 4 is a flow diagram of operation S203 in accordance with some embodiments of the present disclosure. In some embodiments, as shown in Fig. 4, operation S203 includes sub-operations S401-S402.

In sub-operation S401, as shown in Fig. 1, the peripheral device 13 generates an image data IMG2 of the physical environment. In some embodiments, the peripheral device 13 uses the camera 132 to captures the aforementioned peripheral-based images as the image data IMG2.

In sub-operation S402, the peripheral device 13 calculates an image-based pose data according to the image data IMG2 and the host map HM to generate the second pose data POS2. In some embodiments, as shown in Fig. 1, the processor 130 receives the image data IMG2 provided by the camera 132 and the host map HM transferred by the host device 11, and uses the feature extraction based localization technologies to calculate the image-based pose data. In particular, by the feature extraction based localization technologies, the processor 130 selects at least one image from the image data IMG2 as at least one key frame, extracts multiple feature points from the at least one key frame, and matches these feature points to the map points of the host map HM to determine the position and/or orientation of the peripheral device 13 in the host map HM as the image-based pose data. In some embodiments, the image-based pose data is directly used by the processor 130 as the second pose data POS2.

In some practical applications, because the host map HM is established by the host device 11 but not by the peripheral device 13, it may take the processor 130 of the peripheral device 13 plenty of time to match the feature points extracted from the at least one key frame to the map points of the host map HM. Accordingly, in some further embodiments of sub-operation S402, the processor 130 of the peripheral device 13 uses the first pose data POS1 (e.g., the interaction-based pose data) to pick at least one part in the host map HM to match with the feature points extracted from the at least one key frame. In such way, the processor 130 can speed the determination of the position and/or orientation of the peripheral device 13 in the host map HM. It should be understood that the first pose data POS1 generated by the host device 11 can be received by the peripheral device 13 before sub-operation S402 is executed. It can be seen from these that the peripheral device 13 can generate the image-based pose data according to the first pose data POS1, the image data IMG2 and the host map HM.

As the above descriptions of sub-operation S302, the sampling frequency (e.g., at least 100 Hz) of the motion sensor 134 is high enough for the resolution requirements of the immersive system in comparison with the sampling frequency (e.g., 30 Hz) of the camera 132. Accordingly, in some further embodiments of sub-operation S402, at each break in the image capture of the camera 132, the processor 130 performs some mathematical calculations on the motion data M1 generated by the motion sensor 134 to calculate the position and/or orientation of the peripheral device 13 in the physical environment as the second pose data POS2. In brief, the peripheral device 13 can generate the second pose data POS2 according to at least one of the motion data M1 and the image-based pose data to satisfy the resolution requirements of the immersive system.

Referring to Fig. 2 again, in operation S204, the peripheral device 13 transfers the second pose data POS2 to stop the host device 11 generating the first pose data POS1. In some embodiments of operation S204, the host device 11 stops calculating the interaction-based pose data according to the image data IMG1 when receiving the second pose data POS2. Instead, the host device 11 utilizes the processor 130 of the peripheral device 13 to perform the calculations, so as to obtain the position and/or orientation of the peripheral device 13 in the physical environment (i.e., obtain the second pose data POS2). By such arrangements, the peripheral device 13 is not required to be in the proximity of the host device 11 during the whole operation of the multi-device system 100.

In accordance with the above embodiments that the host device 11 uses the motion data M1 to generate the first pose data POS1, in some further embodiments of operation S204, when the host device 11 receives the second pose data POS2 generated by the peripheral device 13, the host device 11 stops generating the first pose data POS1 according to the motion data M1. In these further embodiments, the peripheral device 13 stops transferring the motion data M1 to the host device 11 when the second pose data POS2 is generated, and the processor 110 of the host device 11 stops using the motion data M1 to generate the first pose data POS1.

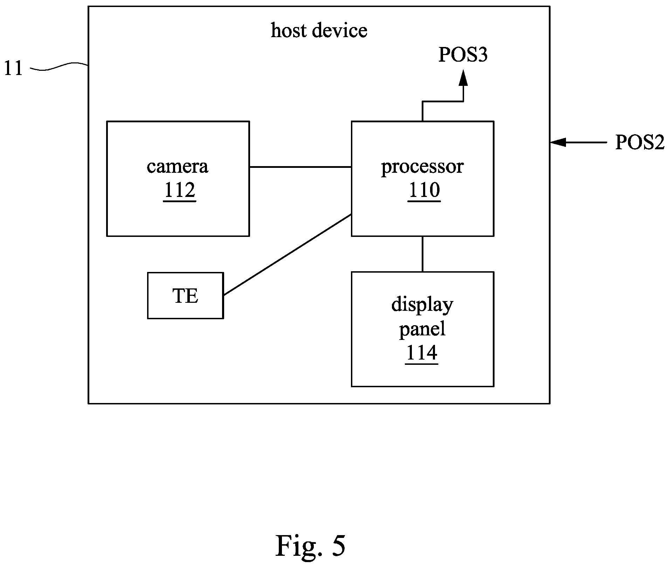

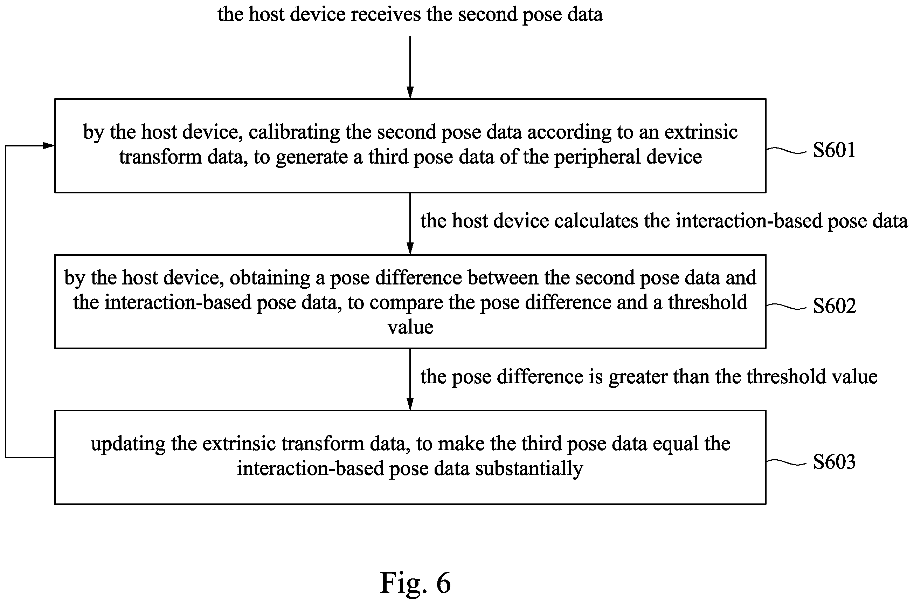

It should be understood that, as time passes, the second pose data POS2 may drift away from the position and/or orientation of the peripheral device 13 in a perspective of the host device 11. After all, the second pose data POS2 is generated by the peripheral device 13 but not by the host device 11. Accordingly, in some embodiments, the host device 11 is configured to calibrate the second pose data POS2, which would be described in detail below with reference to Figs. 5 and 6. Fig. 5 is a block diagram of the host device 11 in accordance with some embodiments of the present disclosure. Fig. 6 is a flow diagram of the tracking method 200 in accordance with some embodiments of the present disclosure.

In some embodiments, the tracking method 200 of the present disclosure may further include operations S601-S603. As shown in Fig. 6, operation S601 may be executed after the host device 11 receives the second pose data POS2. In operation S601, as shown in Fig. 5, the host device 11 calibrates the second pose data POS2 according to an extrinsic transform data TE, to generate a third pose data POS3 of the peripheral device 13. In some embodiments, the processor 110 uses the extrinsic transform data TE to transform the second pose data POS2 into the third pose data POS3. That is to say, the third pose data POS3 mathematically equals the second pose data POS2 multiplied by the extrinsic transform data TE.

In the above embodiments, the extrinsic transform data TE is stored in the host device 11, and can be set by the processor 110 according to the second pose data POS2 and the interaction-based pose data before operation S601 is executed. In particular, the second pose data POS2 and the interaction-based pose data which are used to set the extrinsic transform data TE may have the same or similar timestamps. For example, a time difference between two timestamps of the second pose data POS2 and the interaction-based pose data may be less than a time threshold (e.g., 0.03 sec). In some embodiments, the extrinsic transform data TE is used to transform the second pose data POS2 into the interaction-based pose data, that is, the second pose data POS2 multiplied by the extrinsic transform data TE mathematically equals the interaction-based pose data. Accordingly, the extrinsic transform data TE can be derived by dividing the interaction-based pose data by the second pose data POS2.

In some embodiments, when the host device 11 receives the second pose data POS2, the processor 110 would determine if the interaction between the host device 11 and the peripheral device 13 can be enabled or not (for example, if the camera 112 can capture the images of the trackable object 136 or not). If the interaction between the host device 11 and the peripheral device 13 can be enabled and the host device 11 calculates the interaction-based pose data, operation S602 is executed. Moreover, if the interaction between the host device 11 and the peripheral device 13 cannot be enabled, the tracking method 200 is ended after operation S601.

In operation S602, the host device 11 obtains a pose difference between the second pose data POS2 and the interaction-based pose data, to compare the pose difference and a threshold value.

As the above descriptions of Fig. 1, host pose data of the host device 11 (i.e., the position and/or orientation of the host device 11) can be generated by the processor 110 of the host device 11. Furthermore, the processor 110 can use a relationship between the host pose data of the host device 11 and the second pose data POS2 of the peripheral device 13 to generate a first image (not shown) of the peripheral device 13 (or to project the first image on the immersive content CI). Similarity, the processor 110 can use another relationship between the host pose data of the host device 11 and the interaction-based pose data of the peripheral device 13 to generate a second image (not shown) of the peripheral device 13 (or to project the second image on the immersive content CI). In brief, the processor 110 can generate the first image and the second image according to the second pose data POS2 and the interaction-based pose data, respectively.

Notably, the user U1 who views the immersive content CI can visually perceive the peripheral device 13 no matter which of the first image and the second image is displayed by the display panel 114. However, if the second pose data POS2 drifts away from the position and/or orientation of the peripheral device 13 in the perspective of the host device 11 as time passes, the first image generated according to the second pose data POS2 and displayed by the display panel 114 may cause the user U1 to mistakenly perceive the peripheral device 13 visually.

In some embodiments of operation S602, the processor 110 of the host device 11 calculates a pixel shift from the first image to the second image as the pose difference. For example, the pixel shift can be defined by a distance from a center coordinate of the second image to a center coordinate of the first image. In some embodiments, the threshold value is preset to be, for example 5 pixels. As shown in Fig. 6, when the processor 110 determines that the pose difference is greater than the threshold value, operation S603 is executed.

In operation S603, the host device 11 updates the extrinsic transform data TE, to make the third pose data POS3 equal the interaction-based pose data substantially. In some embodiments, when the pose difference is greater than the threshold value (i.e., the second pose data POS2 and the interaction-based pose data are significantly different to each other), the processor 110 of the host device 11 divides the interaction-based pose data by the second pose data POS2 to calculate new extrinsic transform data TE, and stores this new extrinsic transform data TE to replace the extrinsic transform data TE which is previously stored in the host device 11. By such arrangements, if the third pose data POS3 is generated by transforming the second pose data POS2 by the new extrinsic transform data TE, the third pose data POS3 would equal the interaction-based pose data substantially.

In some embodiments, as shown in Fig. 6, when the extrinsic transform data TE which is previously stored in the host device 11 is updated, operation S601 can be executed again. Accordingly, the processor 110 of the host device 11 can also update the third pose data POS3 of the peripheral device 13 according to the new extrinsic transform data TE.

In some further embodiments, if the processor 110 determines that the pose difference is not greater than the threshold value in operation S602, the tracking method 200 is ended after operation S602. That is to say, the extrinsic transform data TE which is previously stored in the host device 11 is not updated.

In the embodiments of Figs 5 and 6, the interaction-based pose data represents the position and/or orientation of the peripheral device 13 in the perspective of the host device 11, and the pose difference between the second pose data POS2 and the interaction-based pose data represents a drift from the interaction-based pose data to the second pose data POS2. It can be seen from these that the extrinsic transform data TE can be used to eliminate the drift from the interaction-based pose data to the second pose data POS2.

As can be seen from the above embodiments of the present disclosure, the multi-device system 100 tracks the peripheral device 13 by implementing a pose switching strategy, to have benefits of using both the interaction-based tracking technologies and the feature extraction based localization technologies. For example, the host device 11 generates the first pose data POS1 by using the interaction-based tracking technologies until the peripheral device 13 starts generating the second pose data POS2 by using the feature extraction based localization technologies. In such way, the peripheral device 13 is not limited to be in the field of view (FOV) of the host device 11, and the host device 11 is capable of tracking the peripheral device 13 without being limited by its dead zones.

Furthermore, when the second pose data POS2 generated by the peripheral device 13 using the feature extraction based localization technologies drifts as time passes, the host device 11 calibrates the second pose data POS2 by using the interaction-based tracking technologies because the interaction-based tracking technologies are capable of providing accurate tracking results. Also, in such arrangements, the host device 11 can ensure the position and/or orientation provided by the peripheral device 13 to be in alignment with the spatial coordinate system of the host device 11 without continuously transferring data to the peripheral device 13. In sum, the multi-device system 100 has advantages of accurate tracking, zero dead zone, efficient data transfer, etc.

The disclosed methods, may take the form of a program code (i.e., executable instructions) embodied in tangible media, such as floppy diskettes, CD-ROMS, hard drives, or any other transitory or non-transitory machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

Although the present disclosure has been described in considerable detail with reference to certain embodiments thereof, other embodiments are possible. Therefore, the spirit and scope of the appended claims should not be limited to the description of the embodiments contained herein. It will be apparent to those skilled in the art that various modifications and variations can be made to the structure of the present disclosure without departing from the scope or spirit of the invention. In view of the foregoing, it is intended that the present invention cover modifications and variations of this invention provided they fall within the scope of the following claims.

## Claims

1. A tracking method, applicable to a multi-device system in a physical environment, wherein the multi-device system comprises a host device and a peripheral device, and the tracking method comprises:
by the host device, generating a first pose data of the peripheral device based on an interaction between the host device and the peripheral device;
by the peripheral device, receiving a host map of the physical environment established by the host device;
by the peripheral device, generating a second pose data of the peripheral device based on the host map; and
by the peripheral device, transferring the second pose data to stop the host device generating the first pose data.

2. The tracking method of claim 1, wherein generating the second pose data based on the host map comprises:
by the peripheral device, generating an image data of the physical environment; and
by the peripheral device, calculating an image-based pose data according to the image data and the host map to generate the second pose data.

3. The tracking method of claim 2, further comprising:
by the peripheral device, receiving the first pose data, wherein the image-based pose data is calculated according to the first pose data, the image data and the host map.

4. The tracking method of claim 2, further comprising:
by the peripheral device, generating a motion data corresponding to a movement of the peripheral device, wherein the second pose data is generated according to at least one of the motion data and the image-based pose data.

5. The tracking method of claim 1, wherein generating the first pose data based on the interaction between the host device and the peripheral device comprises:
by the host device, generating an image data of at least one trackable object arranged on the peripheral device; and
by the host device, calculating an interaction-based pose data according to the image data to generate the first pose data.

6. The tracking method of claim 5, further comprising:
by the host device, receiving a motion data corresponding to a movement of the peripheral device, wherein the first pose data is generated according to at least one of the motion data and the interaction-based pose data.

7. The tracking method of claim 6, further comprising:
by the peripheral device, stopping transferring the motion data when the second pose data is generated.

8. The tracking method of claim 1, further comprising:
by the host device, calibrating the second pose data according to an extrinsic transform data, to generate a third pose data of the peripheral device.

9. The tracking method of claim 8, further comprising:
when the host device calculates an interaction-based pose data, by the host device, obtaining a pose difference between the second pose data and the interaction-based pose data, to compare the pose difference and a threshold value, wherein the interaction-based pose data is calculated according to an image data of at least one trackable object arranged on the peripheral device; and
when the pose difference is greater than the threshold value, by the host device, updating the extrinsic transform data, to make the third pose data equal the interaction-based pose data substantially.

10. The tracking method of claim 9, wherein obtaining the pose difference between the second pose data and the interaction-based pose data comprises:
by the host device, generating a first image and a second image according to the second pose data and the interaction-based pose data, respectively; and
by the host device, calculating a pixel shift from the second image to the first image as the pose difference.

11. A multi-device system, operable in a physical environment, and comprising:
a host device, configured to establish a host map of the physical environment; and
a peripheral device, configured to receive the host map,
wherein the host device is configured to generate a first pose data of the peripheral device based on an interaction between the host device and the peripheral device, and
wherein the peripheral device is configured to generate a second pose data of the peripheral device based on the host map, and is configured to transfer the second pose data to stop the host device generating the first pose data.

12. The multi-device system of claim 11, wherein the peripheral device is configured to generate an image data of the physical environment, and is configured to calculate an image-based pose data according to the image data and the host map to generate the second pose data.

13. The multi-device system of claim 11, wherein the host device is configured to generate an image data of at least one trackable object arranged on the peripheral device, and is configured to calculate an interaction-based pose data according to the image data to generate the first pose data.

14. The multi-device system of claim 11, wherein the host device is further configured to calibrate the second pose data according to an extrinsic transform data, to generate a third pose data of the peripheral device.

15. A non-transitory computer readable storage medium with a computer program to execute a tracking method applicable to a multi-device system in a physical environment, wherein the multi-device system comprises a host device and a peripheral device, and the tracking method comprises:
by the host device, generating a first pose data of the peripheral device based on an interaction between the host device and the peripheral device;
by the peripheral device, receiving a host map of the physical environment established by the host device;
by the peripheral device, generating a second pose data of the peripheral device based on the host map; and
by the peripheral device, transferring the second pose data to stop the host device generating the first pose data.
